# EUROPEAN PATENT APPLICATION

(11) **EP 4 438 630 A1**
(43) Date of publication of application: **02.10.2024**
(21) Application number: 24167683.2
(22) Date of filing: 28.03.2024
(51) Int. Cl.: C08B 11/02, C08B 11/08, C08L 1/28

(54) **METHOD OF CONTINUOUSLY PRODUCING DEPOLYMERIZED CELLULOSE ETHER**

(30) Priority: 29.03.2023 JP 2023053317
(71) Applicant: Shin-Etsu Chemical Co., Ltd., Chiyoda-ku, Tokyo 1000005 (JP)
(72) Inventor: MIKI, Kentaro, Niigata, 942-8601 (JP); KUROTANI, Shinichi, Niigata, 942-8601 (JP); KITAMURA, Akira, Niigata, 942-8601 (JP); NARITA, Mitsuo, Niigata, 942-8601 (JP)
(74) Representative: Cabinet Nony

(57) **Abstract**

Provided is a method of continuously producing a depolymerized cellulose ether that is space-saving and highly productive, and is capable of reducing adhesion of a cellulose ether powder body to reactors and producing a depolymerized cellulose ether with a suppressed degree of yellowness and contaminants. The method includes: bringing a raw material cellulose ether that is of a temperature of 3°C to less than 40°C and is continuously supplied from a raw material tank 1 to a moisture conditioning tank 2 into contact with a water vapor B to obtain a moisture-conditioned cellulose ether; heating the moisture-conditioned cellulose ether to obtain a heated cellulose ether; continuously bringing a gaseous hydrogen chloride into contact with the heated cellulose ether to obtain a depolymerized cellulose ether product; and mixing the depolymerized cellulose ether product with a basic compound to obtain a depolymerized cellulose ether.

## Description

### [Technical field]

The present invention relates to a method of continuously producing a depolymerized cellulose ether.

### [Background art]

A cellulose ether having a low degree of polymerization is used for, for example, film coating of solid preparations such as tablets. Such a film coating is used to mask the unpleasant taste of a drug, prevent the drug contained from denaturing, and control the dissolution behavior in the digestive system after ingestion. Further, films obtained by drying solutions of cellulose ethers having a low degree of polymerization are widely used as bases for film preparations and hard capsules.

In general, a cellulose ether having a low degree of polymerization is obtained by depolymerizing cellulose ethers having a high degree of polymerization. As a depolymerization method, there is widely used a method of bringing an acid such as hydrogen chloride into contact with a powdery cellulose ether having a high degree of polymerization and performing heating. As disclosed in Patent documents 1 and 2, an apparatus used for depolymerizing a cellulose ether having a high degree of polymerization is usually a batch-type reactor in which the reactor itself rotates, such as a conical blender.

### [Prior art documents]

### [Patent documents]

[Patent document 1] JP-A-Hei 08-301901
[Patent document 2] Japanese Unexamined Patent Application Publication (Translation of PCT Application) No.2020-531599

### [Summary of the invention]

### [Problems to be solved by the invention]

However, in the cases of the methods described in Patent documents 1 and 2, when there is a need to industrially produce a large amount of a cellulose ether having a low degree of polymerization, a large-scale batch-type reactor is required whereby there occur drawbacks such as a lager installation space for the reactor and a higher investment cost.

Further, in terms of using a batch-type reactor to produce a cellulose ether having a low degree of polymerization at an industrial level, there is a problem that adhesion of a cellulose ether powder to the inner region of the apparatus will increase with time as the number of production increases. When there is an increase in adhesion of the cellulose ether powder to the inner region of the apparatus, a heat-transfer property rendered from the jacket of the reactor to the cellulose ether powder will deteriorate such that the viscosity of the resultant cellulose ether having a low degree of polymerization will vary per batch, and that a discharge failure will occur when discharging the cellulose ether having a low degree of polymerization from the reactor. Further, when falling off the inner region of the apparatus, the cellulose ether powder that has once adhered thereto will turn into black contaminants and be mixed into the product whereby the product value of the cellulose ether having a low degree of polymerization will be impaired.

In order to remove such adhesion of the cellulose ether powder, it is often required that an operation of washing the reactor be performed between batches if the cellulose ether having a low degree of polymerization is industrially produced by a batch-type reactor.

If using a continuous reactor instead of a batch-type reactor, since a continuous reactor can be downsized, it is assumed that a cellulose ether having a low degree of polymerization can be industrially produced in an efficient manner while reducing the installation space of the reactor and the investment cost. However, in the case of a continuous reactor, since the operation of washing the reactor cannot be performed between batches as is the case with a batch-type reactor, it is difficult to remove the cellulose ether powder that has adhered to the apparatus. Further, since it is also difficult to prevent adhesion, a continuous production of a cellulose ether having a low degree of polymerization has not yet been realized.

The present invention was made in view of the above circumstances, and it is an object of the present invention to provide a method of continuously producing a depolymerized cellulose ether that is space-saving and highly productive, and is capable of reducing adhesion of a cellulose ether powder to reactors and producing a depolymerized cellulose ether with a suppressed degree of yellowness and amount of contaminants generated.

### [Means to solve the problems]

The inventors of the present invention diligently conducted a series of studies to solve the above problems, and completed the invention as follows. That is, the inventors found that by adjusting the temperature of a raw material cellulose ether supplied from a raw material tank to a moisture conditioning tank to less than 40°C, and by employing a moisture conditioning step of bringing the raw material cellulose ether supplied into contact with a water vapor, adhesion of the cellulose ether powder to reactors can be reduced, and there can be continuously produced a depolymerized cellulose ether with a suppressed degree of yellowness and amount of contaminants generated.

Specifically, the present invention is to provide the following method of continuously producing a depolymerized cellulose ether.
[1] A method of continuously producing a depolymerized cellulose ether, comprising the steps of:
   (a) bringing a raw material cellulose ether, continuously supplied from a raw material tank to a moisture conditioning tank, into contact with a water vapor for moisture conditioning to obtain a moisture-conditioned cellulose ether;
   (b) heating the moisture-conditioned cellulose ether, continuously supplied from the step (a), to obtain a heated cellulose ether;
   (c) continuously bringing gaseous hydrogen chloride into contact with the heated cellulose ether to depolymerize the heated cellulose ether to obtain a depolymerized cellulose ether product; and
   (d) mixing the depolymerized cellulose ether product with a basic compound for neutralization to obtain a depolymerized cellulose ether,
   wherein the temperature of the raw material cellulose ether continuously supplied from the raw material tank to the moisture conditioning tank ranges from 3°C to less than 40°C.
[2] The method according to [1], further comprising a step of eliminating hydrogen chloride and water from the depolymerized cellulose ether product continuously supplied from the step (c) to obtain a washed depolymerized cellulose ether product, wherein the step of eliminating hydrogen chloride and water is performed between the steps (c) and (d).
[3] The method according to [1] or [2], wherein a ratio between a rate at which the moisture-conditioned cellulose ether is supplied from the step (a) to the step (b) and a rate at which the depolymerized cellulose ether product is discharged from the step (c) ranges from 0.9 to 1.1.
[4] The method according to any one of [1] to [3] further comprising a cooling step of cooling the depolymerized cellulose ether after the step (d).
[5] The method according to any one of [1] to [4], wherein the temperature of the moisture-conditioned cellulose ether continuously supplied from the step (a) to the step (b) ranges from 50 to 90°C.
[6] The method according to any one of [1] to [5], wherein in the step (a), the moisture-conditioning tank is jacketed and the jacket temperature ranges from 20 to 120°C.
[7] The method according to any one of [1] to [6], wherein the raw material cellulose ether is at least one selected from the group consisting of an alkylcellulose, a hydroxyalkylcellulose, and a hydroxyalkyl alkyl cellulose.

Here, the depolymerized cellulose ether has a polymerization degree lower than that of the cellulose ether prior to depolymerization, and also encompasses a cellulose ether having a low degree of polymerization that is used for, for example, film coating of solid preparations such as tablets.

As used herein, the terms "comprised between" and "ranging from" should be understood as including the limits of the range.

In the context of the invention, the phrase "temperature-raised" or "temperature-raising" should be understood to mean, respectively, "heated" or "heating".

### [Effects of the invention]

According to the present invention, a cellulose ether having a low degree of polymerization with a suppressed degree of yellowness and amount of contaminants generated can be produced by a continuous production method that is space-saving and highly productive.

### [Brief description of the drawings]

[FIG.1] is a drawing showing one example of a production system used in the production method of the present invention.
[FIG.2] is a drawing showing another example of the production system used in the production method of the present invention.

### [Mode for carrying out the invention]

A depolymerized cellulose ether can be produced by a continuous production method that is space-saving and highly productive. This method is characterized by including at least a moisture conditioning step of obtaining a moisture-conditioned cellulose ether by bringing a raw material cellulose ether continuously supplied from a raw material tank to a moisture conditioning tank into contact with a water vapor; a heating (or temperature raising) step of obtaining a heated (or temperature-raised) cellulose ether by heating the moisture-conditioned cellulose ether continuously supplied from the moisture conditioning step; a depolymerizing step of obtaining a depolymerized cellulose ether product by depolymerizing the heated (or temperature-raised) cellulose ether as a result of continuously bringing gaseous hydrogen chloride into contact with the heated (or temperature-raised) cellulose ether; and a neutralizing step of obtaining a depolymerized cellulose ether by neutralizing the depolymerized cellulose ether product as a result of mixing the depolymerized cellulose ether product with a basic compound. The method is also characterized in that the temperature of the raw material cellulose ether continuously supplied from the raw material tank to the moisture conditioning tank ranges from 3°C to less than 40°C.

The continuous production method for producing a depolymerized cellulose ether is described below. In this specification, "continuous" refers to a mode where while production is being conducted, a powder is supplied from a previous step and discharged to the next step in a continuous manner with regard to each step; this mode shall be distinguished from a batch mode where the supply and discharge of the raw material (powder) is non-continuous with regard to each step.

Further, apparatuses used in the steps are connected to one another through pipes. It is preferred that a rotary valve be provided at both a powder supply port and powder discharge port of the apparatus used in each step so as to allow the powder to be supplied and discharged in a quantitative manner.

In the beginning, the raw material cellulose ether is described. Examples of the raw material cellulose ether include a cellulose ether having a high degree of polymerization such as a hydroxyalkyl alkyl cellulose, an alkylcellulose, and a hydroxyalkylcellulose.

Examples of a hydroxyalkyl alkyl cellulose include hydroxypropyl methylcellulose (also referred to as "HPMC" hereunder) in which hydroxypropoxy groups are preferably in an amount of 4.0 to 13.0% by mass, and methoxy groups are preferably in an amount of 19.0 to 32.0% by mass; hydroxyethyl methylcellulose in which hydroxyethoxy groups are preferably in an amount of 4.0 to 15.0% by mass, and methoxy groups are preferably in an amount of 20.0 to 26.0% by mass; and hydroxyethyl ethylcellulose in which hydroxyethoxy groups are preferably in an amount of 8.0 to 20.0% by mass, and ethoxy groups are preferably in an amount of 20.0 to 38.0% by mass.

Examples of an alkylcellulose include methylcellulose (also referred to as "MC" hereunder) in which methoxy groups are preferably in an amount of 18.0 to 36.0% by mass; and ethylcellulose in which ethoxy groups are preferably in an amount of 40.0 to 50.0% by mass.

Examples of a hydroxyalkylcellulose include hydroxy ethylcellulose in which hydroxyethoxy groups are preferably in an amount of 2.0 to 70.0% by mass; and hydroxy propylcellulose in which hydroxypropoxy groups are preferably in an amount of 2.0 to 70.0% by mass.

Ratios of alkoxy groups and hydroxy alkoxy groups contained in an alkylcellulose, hydroxyalkylcellulose, and hydroxyalkyl alkyl cellulose can be measured by a method of analysis concerning hypromellose which is described in Japanese Pharmacopoeia 18th edition.

In terms of washability of the raw material cellulose ether, it is preferred that a 2% by mass aqueous solution of the raw material cellulose ether at 20°C have a viscosity of 400 to 200,000 mPa·s, more preferably 400 to 150,000 mPa·s, even more preferably 400 to 100,000 mPa·s.

Here, as for the 2% by mass aqueous solution of the raw material cellulose ether at 20°C, when the viscosity thereof is not lower than 600 mPa·s, the viscosity can be measured by a single cylinder-type rotational viscometer in accordance with "Viscosity measurement by rotational viscometer" described in the section "General Tests, Processes and Apparatus" of Japanese Pharmacopoeia 18th edition. Meanwhile, if the viscosity is lower than 600 mPa·s, measurement can be carried out by an Ubbelohde-type viscometer in accordance with "Viscosity measurement by capillary tube viscometer" described in the section "General Tests, Processes and Apparatus" of Japanese Pharmacopoeia 18th edition.

The raw material cellulose ether can be produced by a known method.

The raw material cellulose ether may, for example, be produced by a production method including at least a step of obtaining an alkali cellulose by bringing an alkali metal hydroxide solution into contact with pulp; a step of obtaining a cellulose ether product by reacting the alkali cellulose and an etherification agent; a step of washing and drying the cellulose ether product; and if necessary, a step of crushing the dried product.

Although not particularly limited, the alkali metal hydroxide solution is preferably an alkali metal hydroxide aqueous solution in terms of economic efficiency.

Although not particularly limited, the alkali metal hydroxide aqueous solution is preferably a sodium hydroxide aqueous solution in terms of economic efficiency.

Although not particularly limited, examples of the etherification agent include alkyl halide such as methyl chloride and ethyl chloride; and alkylene oxide such as ethylene oxide and propylene oxide.

Next, the raw material cellulose ether is obtained by washing, drying, and crushing the cellulose ether product as appropriate.

A water content ratio of the raw material cellulose ether is preferably a value larger than 0% and less than or equal to 2.00% by mass, more preferably 0.1 to 1.50% by mass, in terms of preventing agglomeration of the raw material cellulose ether.

The water content ratio is defined as {(total mass of cellulose ether - absolute dry mass of cellulose ether) / (total mass of cellulose ether)} × 100%.

Here, the "total mass of cellulose ether" refers to a mass of an undried raw material cellulose ether that is precisely measured in accordance with "Loss on Drying Test" of Japanese Pharmacopoeia 18th edition. Further, the "absolute dry mass of cellulose ether" refers to a mass of a raw material cellulose ether that has been dried in accordance with "Loss on Drying Test" of Japanese Pharmacopoeia 18th edition.

The temperature (product temperature) of the raw material cellulose ether ranges from 3°C to less than 40°C, preferably 5 to 38°C, more preferably 7 to 35°C, even more preferably 10 to 30°C. When the temperature (product temperature) of the raw material cellulose ether is 40°C or higher, the cellulose ether powder will adhere to the apparatuses that are used in the moisture conditioning step and the temperature raising step. Meanwhile, if the temperature (product temperature) of the raw material cellulose ether is, for example, lower than 3°C, a significant increase in temperature will be observed in the temperature raising step whereby there may be required a larger apparatus, and a large amount of energy may be consumed.

There are no particular restrictions on a method for adjusting the temperature of the raw material cellulose ether. There may be employed, for example, a method in which the cellulose ether is put into a jacketed container, followed by pouring a fluid such as water into the jacket, whereby the temperature of the raw material cellulose ether is adjusted by adjusting the temperature of the jacket; a method in which the cellulose ether is put into a jacketed screw conveyor with the jacket temperature thereof being adjusted so that the temperature of the raw material cellulose ether can be continuously adjusted while conveying the raw material cellulose ether; or a method in which the temperature of the raw material cellulose ether is adjusted by passing air, nitrogen gas or the like of a given temperature through the cellulose ether.

The temperature of the raw material cellulose ether can be measured by a thermometer provided in the raw material tank or in a pipe for transporting the raw material cellulose ether from the raw material tank to the moisture conditioning step.

### (a) Moisture conditioning step

The moisture conditioning step is described hereunder.

In the moisture conditioning step, the moisture-conditioned cellulose ether is obtained by bringing the raw material cellulose ether into contact with a water vapor in the moisture conditioning tank. The moisture conditioning tank is of a continuous type, and has at least one supply port and at least one discharge port. The supply port of the moisture conditioning tank is connected to the discharge port of the raw material tank containing the raw material cellulose ether through a pipe, and the discharge port of the moisture conditioning tank is connected to the supply port of a later-described temperature raising apparatus through a pipe. In addition, the moisture conditioning tank has a water vapor supply port.

As a continuous moisture conditioning tank, there may be listed a vertical high-speed stirring mixer, a horizontal mixer, and a continuous mixing mixer. A vertical high-speed stirring mixer may, for example, be an axial mixer (by Sugiyama Heavy Industrial Co., Ltd.). A horizontal mixer may, for example, be a pam apex mixer WA model (Pacific Machinery & Engineering Co., Ltd.). A continuous mixing mixer may, for example, be Flexomix and Turbulizer (both by Hosokawa Micron Corporation).

In the moisture conditioning tank, the raw material cellulose ether is brought into contact with a water vapor while being stirred. Here, a water vapor refers to a saturated water vapor and a superheated water vapor. A saturated water vapor is a gaseous water that exists with a liquid water in equilibrium; a superheated water vapor is a gaseous water that exists at a temperature higher than the boiling point of water at a given pressure.

A saturated water vapor is preferred in terms of efficiently performing moisture conditioning on the raw material cellulose ether.

The temperature of the water vapor ranges preferably from 100 to 150°C in terms of efficiently performing moisture conditioning on the raw material cellulose ether, and in terms of quality of the depolymerized cellulose ether obtained.

From the perspectives of preventing adhesion of the cellulose ether powder to an apparatus and quality of the depolymerized cellulose ether obtained, a ratio between the amount of the water vapor supplied to the moisture conditioning tank in the moisture conditioning step and the amount of the raw material cellulose ether supplied thereto in such step ([amount of water vapor supplied] / [amount of raw material cellulose ether supplied]) ranges preferably from 0.02 to 0.1, more preferably from 0.025 to 0.08, most preferably from 0.027 to 0.05, in terms of weight ratio.

In terms of preventing a rise in inner pressure of the moisture conditioning tank and condensation therein, it is preferred that a bag filter be provided in the moisture conditioning tank whereby excess water vapor that was not absorbed by the raw material cellulose ether can be discharged outside the moisture conditioning tank. For the purpose of discharging the excess water vapor outside the moisture conditioning tank, an inert gas such as a nitrogen gas may be poured and flowed into the moisture conditioning tank.

An inert gas such as a nitrogen gas may be previously mixed with the water vapor and then supplied to the moisture conditioning tank as a mixture of the water vapor and the inert gas; or the inner gas may be supplied to the moisture conditioning tank through a supply port that is different from the supply port through which the water vapor is supplied.

In terms of preventing adhesion of the cellulose ether powder to the moisture conditioning tank and the later-described temperature raising apparatus, the jacket temperature of the moisture conditioning tank ranges preferably from 20 to 120°C, more preferably from 30 to 100°C, even more preferably from 35 to 85°C. The jacket temperature of the moisture conditioning tank can be controlled by adjusting the temperature of a fluid poured into the jacket of the moisture conditioning tank.

In order to mix the raw material cellulose ether and the water vapor, the moisture conditioning tank may have one or both of a main shaft and a chopper. The rotation number of the main shaft ranges preferably from 10 to 1,000 rpm in terms of sufficiently mixing the raw material cellulose ether and the water vapor; the rotation number of the chopper ranges preferably from 10 to 5,000 rpm in terms of sufficiently mixing the raw material cellulose ether and the water vapor.

In terms of quality of the depolymerized cellulose ether obtained and preventing adhesion of the cellulose ether powder to the apparatuses used in the temperature raising step and the steps thereafter, the temperature of the moisture-conditioned cellulose ether at the discharge port of the moisture conditioning tank ranges preferably from 30 to 100°C, more preferably from 50 to 90°C. Here, in this specification, "temperature of moisture-conditioned cellulose ether" refers to the temperature of the moisture-conditioned cellulose ether at the discharge port of the moisture conditioning tank.

In terms of quality of the depolymerized cellulose ether obtained and preventing adhesion of the cellulose ether powder to the apparatuses used in the temperature raising step and the steps thereafter, a water content ratio of the moisture-conditioned cellulose ether at the discharge port of the moisture conditioning tank ranges preferably from 1.5 to 6% by mass, more preferably from 2.0 to 4.0% by mass. Here, in this specification, "water content ratio of moisture-conditioned cellulose ether" refers to the water content ratio of the moisture-conditioned cellulose ether at the discharge port of the moisture conditioning tank.

### (b) Heating (or temperature raising) step

The temperature raising step is described hereunder.

In the temperature raising step, the temperature-raised cellulose ether is obtained by raising the temperature of the moisture-conditioned cellulose ether in a temperature raising apparatus.

The temperature raising step is performed using a continuous temperature raising apparatus, and the temperature raising apparatus has at least one supply port and at least one discharge port. The supply port of the temperature raising apparatus is connected to the discharge port of the moisture conditioning tank through a pipe, and the discharge port of the temperature raising apparatus is connected to the supply port of a later-described depolymerization apparatus through a pipe. Examples of the continuous temperature raising apparatus include a jacketed screw conveyor and a jacketed continuous mixer.

In terms of preventing adhesion of the cellulose ether powder to the temperature raising apparatus, the jacket temperature of the temperature raising apparatus ranges preferably from 20 to 120°C. The jacket temperature of the temperature raising apparatus can be controlled by adjusting the temperature of a fluid poured into the jacket of the temperature raising apparatus.

In terms of controlling the viscosity of the depolymerized cellulose ether obtained and preventing adhesion of the cellulose ether powder to the apparatus, the temperature of the temperature-raised cellulose ether at the discharge port of the temperature raising apparatus ranges preferably from 55 to 90°C, more preferably from 60 to 88°C, even more preferably from 63 to 85°C. Here, in this specification, "temperature of heated cellulose ether" and "temperature of temperature-raised cellulose ether" refer to the temperature of the heated (or temperature-raised) cellulose ether at the discharge port of the heating (or temperature raising) apparatus.

In terms of quality of the depolymerized cellulose ether obtained and preventing adhesion of the cellulose ether powder to the apparatuses used in the depolymerizing step and the step thereafter, a water content ratio of the temperature-raised cellulose ether at the discharge port of the temperature raising apparatus ranges preferably from 1.5 to 6% by mass, more preferably from 2.0 to 4.0% by mass. Here, in this specification, "water content ratio of temperature-raised cellulose ether" refers to the water content ratio of the temperature-raised cellulose ether at the discharge port of the temperature raising apparatus.

### (c) Depolymerizing step

The depolymerizing step is described hereunder.

In the depolymerizing step, the depolymerized cellulose ether product is obtained by depolymerizing the temperature-raised cellulose ether as a result of continuously bringing the temperature-raised cellulose ether into contact with gaseous hydrogen chloride (hydrogen chloride gas) in a continuous depolymerization apparatus. The depolymerization apparatus has at least one supply port and at least one discharge port. The supply port of the depolymerization apparatus is connected to the discharge port of the temperature raising apparatus through a pipe, and the discharge port of the depolymerization apparatus is connected to the supply port of a later-described neutralization tank or washing apparatus through a pipe.

As a continuous depolymerization apparatus, there may be listed a vertical high-speed stirring mixer, a horizontal mixer, a continuous mixing mixer, and a jacketed screw conveyor. A vertical high-speed stirring mixer may, for example, be an axial mixer (by Sugiyama Heavy Industrial Co., Ltd.). A horizontal mixer may, for example, be a pam apex mixer WA model (Pacific Machinery & Engineering Co., Ltd.). A continuous mixing mixer may, for example, be Flexomix and Turbulizer (both by Hosokawa Micron Corporation).

In the depolymerizing step, in terms of uniformly conducting depolymerization, it is preferred that there be used in combination two or more continuous depolymerization apparatuses that are selected from the abovementioned continuous depolymerization apparatuses.

For example, in a case where two continuous depolymerization apparatuses are used in combination, if the depolymerization apparatus connected to the temperature raising apparatus is regarded as the first depolymerization apparatus, and the depolymerization apparatus connected to the first depolymerization apparatus is regarded as the second depolymerization apparatus, the supply port of the first depolymerization apparatus is connected to the discharge port of the temperature raising apparatus through a pipe, the discharge port of the first depolymerization apparatus is connected to the supply port of the second depolymerization apparatus through a pipe, and the discharge port of the second depolymerization apparatus is connected to the supply port of the later-described neutralization tank or washing apparatus through a pipe. Further, although it is preferred that a supply port of gaseous hydrogen chloride (hydrogen chloride gas) be provided at the first depolymerization apparatus, there may be employed other configurations as well. The similar applies when there are used three or more depolymerization apparatuses.

It is more preferred that an apparatus selected from a vertical high-speed stirring mixer, a horizontal mixer, and a continuous mixing mixer be used as the first depolymerization apparatus, and a jacketed screw conveyor be subsequently used in combination as the second depolymerization apparatus.

In terms of controlling the viscosity of the depolymerized cellulose ether obtained, the jacket temperature of the depolymerization apparatus ranges preferably from 20 to 120°C, more preferably from 30 to 90°C, even more preferably from 50 to 85°C. The jacket temperature of the depolymerization apparatus can be controlled by adjusting the temperature of a fluid poured into the jacket of the depolymerization apparatus.

In terms of preventing leakage of the hydrogen chloride gas outside the depolymerization apparatus, the inner pressure of the depolymerization apparatus ranges preferably from -40 to 0 kPaG.

In order to sufficiently mix the temperature-raised cellulose ether and the hydrogen chloride gas, the depolymerization apparatus may have one or both of a main shaft and a chopper. The rotation number of the main shaft ranges preferably from 10 to 1,000 rpm in terms of sufficiently mixing the temperature-raised cellulose ether and the hydrogen chloride gas; the rotation number of the chopper ranges preferably from 10 to 5,000 rpm in terms of sufficiently mixing the temperature-raised cellulose ether and the hydrogen chloride gas.

In terms of enabling continuous production while preventing adhesion to apparatuses and suppressing occurrence of black contaminants in the product, the acid that is brought into contact with the temperature-raised cellulose ether is preferably gaseous hydrogen chloride.

From the perspective of controlling the viscosity of the depolymerized cellulose ether obtained, a ratio between the amount of the gaseous hydrogen chloride supplied and the amount of the temperature-raised cellulose ether supplied ([amount of gaseous hydrogen chloride supplied] / [amount of temperature-raised cellulose ether supplied]) ranges preferably from 0.0001 to 0.01, more preferably from 0.001 to 0.008, in terms of weight ratio.

In terms of controlling the viscosity of the depolymerized cellulose ether obtained, the product temperature of the depolymerized cellulose ether product in the depolymerizing step ranges preferably from 55 to 90°C, more preferably from 60 to 88°C, even more preferably from 63 to 85°C.

There are no particular restrictions on a depolymerization time in the depolymerizing step so long as the depolymerized cellulose ether will have a desired viscosity; in terms of obtaining a depolymerized cellulose ether with a lower degree of yellowness, the depolymerization time ranges preferably from 0.1 to 4.0 hours, more preferably from 0.2 to 2.0 hours. Here, the depolymerization time refers to a time period between when the temperature-raised cellulose ether has been supplied to the depolymerization apparatus and when the cellulose ether is then discharged from the depolymerization apparatus as the depolymerized cellulose ether product. When two or more depolymerization apparatuses are used in combination in the depolymerizing step, a sum total of the depolymerization times spent with regard to each depolymerization apparatus is regarded as the depolymerization time in the depolymerizing step. The depolymerization time can be obtained by dividing a remaining amount (kg) of the cellulose ether powder in the depolymerization apparatus in terms of anhydrous cellulose ether by a discharge rate (kg/hr) of the depolymerized cellulose ether product at the discharge port of the depolymerization apparatus in terms of anhydrous cellulose ether.

In terms of continuously producing the depolymerized cellulose ether in a stable manner, a ratio between a rate at which the moisture-conditioned cellulose ether is supplied from the moisture conditioning step to the temperature raising step and the rate at which the depolymerized cellulose ether product is discharged from the depolymerizing step ([rate at which moisture-conditioned cellulose ether is supplied from moisture conditioning step to temperature raising step] / [rate at which depolymerized cellulose ether product is discharged from depolymerizing step]) is 0.9 to 1.1, preferably 0.95 to 1.05, more preferably 0.98 to 1.02.

After the depolymerizing step is over, there may further be performed a washing step of obtaining a washed depolymerized cellulose ether product by eliminating hydrogen chloride or the like from the depolymerized cellulose ether product under a reduced pressure, for the purpose of reducing the amount of hydrogen chloride remaining in the depolymerized cellulose ether product. In the washing step, hydrogen chloride (hydrogen chloride gas and/or hydrochloric acid aqueous solution) and water (water vapor and/or liquid water) are capable of being eliminated from the depolymerized cellulose ether product.

The washing step can be performed by a washing apparatus. It is preferred that the washing apparatus be that of a continuous type since the steps before and after the washing step (i.e., depolymerizing step and neutralizing step) are continuous. The continuous washing apparatus has at least one supply port and at least one discharge port. The supply port of the washing apparatus is connected to the discharge port of the depolymerization apparatus through a pipe, and the discharge port of the washing apparatus is connected to the supply port of the later-described neutralization tank through a pipe. Further, the washing apparatus has a discharge port of hydrogen chloride and water that are capable of being discharged outside the system via the washing step.

As a continuous washing apparatus, there may be listed, for example, a jacketed screw conveyor, a jacketed continuous mixer, a continuous vibration-type vacuum dryer (CHUO KAKOHKI CO. LTD), and a belt-type vacuum dryer (by HISAKA manufacturing co., ltd.). Examples of a jacketed continuous mixer may include those similar to the apparatuses that are listed as the examples of the moisture conditioning tank.

In terms of efficiently eliminating hydrogen chloride or the like from the depolymerized cellulose ether product, the inner pressure of the washing apparatus in the washing step ranges preferably from -99 to -60 kPaG.

In terms of efficiently eliminating hydrogen chloride from the depolymerized cellulose ether product, the jacket temperature of the washing apparatus in the washing step ranges preferably from 20 to 120°C.

### (d) Neutralizing step

The neutralizing step is described hereunder.

In the neutralizing step, the depolymerized cellulose ether is obtained by mixing the depolymerized cellulose ether product and a basic compound in a neutralization tank.

As the neutralization tank, there may be used a continuous mixer similar to the moisture conditioning tank; the neutralization tank has at least one supply port and at least one discharge port. The supply port of the neutralization tank is connected to the discharge port of the depolymerization apparatus or the washing apparatus through a pipe, the discharge port of the neutralization tank is connected to the supply port of a later-described product tank or cooling apparatus through a pipe. Further, the neutralization tank has a supply port of the basic compound.

In order to mix the depolymerized cellulose ether product and the basic compound, the neutralization tank may have one or both of a main shaft and a chopper. The rotation number of the main shaft ranges preferably from 10 to 1,000 rpm in terms of sufficiently mixing the depolymerized cellulose ether product and the basic compound; the rotation number of the chopper ranges preferably from 10 to 5,000 rpm in terms of sufficiently mixing the depolymerized cellulose ether product and the basic compound.

In terms of efficiently performing neutralization, the jacket temperature of the neutralization tank ranges preferably from 30 to 120°C.

Examples of the basic compound may include weakly alkaline compounds such as sodium hydrogen carbonate and sodium carbonate.

There are no particular restrictions on the amount of the basic compound added so long as the acid is neutralized; a ratio between the amount of the basic compound supplied and the amount of the depolymerized cellulose ether product supplied ([amount of basic compound supplied] / [amount of depolymerized cellulose ether product supplied]) ranges preferably from 0.001 to 0.01 in terms of weight ratio.

In terms of efficiently performing neutralization, the temperature of the depolymerized cellulose ether at the discharge port of the neutralization tank ranges preferably from 30 to 100°C, more preferably from 40 to 90°C, even more preferably from 50 to 85°C.

After the neutralizing step is over, there may further be performed a cooling step of cooling the depolymerized cellulose ether. By performing a cooling step, the temperature of the depolymerized cellulose ether supplied to the product tank will decrease whereby condensation in the product tank can be prevented from occurring, mixing of contaminants into the product that is attributed to condensation can be prevented, and corrosion of the product tank itself can be prevented as well.

The cooling step can be performed in a continuous cooling apparatus. As the cooling apparatus, there may be used those that are similar to the temperature raising apparatus and the depolymerization apparatus; by setting the jacket temperature of the cooling apparatus lower than that of the depolymerized cellulose ether, the depolymerized cellulose ether is able to be cooled. The cooling apparatus has at least one supply port and at least one discharge port. The supply port of the cooling apparatus is connected to the discharge port of the neutralization tank through a pipe, and the discharge port of the cooling apparatus is connected to the supply port of the product tank through a pipe.

The jacket temperature of the cooling apparatus ranges preferably from 5 to 60°C in terms of efficiently cooling the depolymerized cellulose ether.

The product temperature of the depolymerized cellulose ether at the discharge port of the cooling apparatus ranges preferably from 20 to 70°C in terms of preventing condensation in the product tank, preventing mixing of contaminants into the product (depolymerized cellulose ether) that is attributed to condensation, and preventing corrosion of the product tank itself.

If necessary, the depolymerized cellulose ether may be dried, crushed, and sieved by a sieve with an arbitrary mesh size. While there are no particular restrictions on apparatuses for performing drying, crushing, and sieving, it is preferred that these apparatuses are of continuous type.

In terms of obtaining a depolymerized cellulose ether with a lower degree of yellowness, a rate of decrease in viscosity of the depolymerized cellulose ether to the raw material cellulose ether ranges preferably from 40.0 to 99.99%, more preferably from 50.0 to 99.99%, even more preferably from 60.0 to 99.99%.

Here, the rate of decrease in viscosity refers to a ratio of a difference between the viscosity of the 2% by mass aqueous solution of the raw material cellulose ether at 20°C (viscosity before depolymerization) and the viscosity of a 2% by mass aqueous solution of the depolymerized cellulose ether at 20°C (viscosity after depolymerization) to (viscosity before depolymerization), and is defined as {(viscosity before depolymerization - viscosity after depolymerization) / viscosity before depolymerization} × 100.

In terms of maintaining a lower solution viscosity when performing film coating, the viscosity of the 2% by mass aqueous solution of the depolymerized cellulose ether at 20°C ranges preferably from 1.0 to 20.0 mPa·s, more preferably from 2.0 to 20.0 mPa·s, even more preferably from 3.0 to 15.0 mPa·s. Here, the viscosity of the 2% by mass aqueous solution of the depolymerized cellulose ether at 20°C is a value measured by a method that is similar to the method by which the viscosity of the 2% by mass aqueous solution of the raw material cellulose ether at 20°C is measured.

### [Working examples]

The present invention is described in detail hereunder with reference to working and comparative examples; however, the invention shall not be limited to these working examples.

Here, the measurement of degree of yellowness, the evaluation of the amount of black contaminants, and the evaluation of a #100 pass rate were conducted by the following methods.

### <Measurement of degree of yellowness>

There was prepared a 20°C and 2% by mass aqueous solution of the depolymerized cellulose ether, and an SM color computer ("SM-4" by Suga Test Instruments Co., Ltd.) was used to measure degree of yellowness.

### <Evaluation on amount of black contaminants generated>

After supplying 200 g of the depolymerized cellulose ether to a RO-TAP sieve shaker (by TAKEDA RIKA KOGYO Co., Ltd.) with one layer of an 18-mesh sieve (by Kansai Wire Netting Co., Ltd., effective sieve area 0.0314 m², opening 0.85 mm) installed therein, sieving was performed at a rotation number of 250 rpm, a shake width of 50 mm, and a hammer stroke rate of 67 times/min for 10 min. Next, the depolymerized cellulose ether obtained as a content that had passed through the sieve was collected by an amount of 2.5 g, and was uniformly spread on a petri dish having a diameter of 10 cm so as to be subjected to visual observation, where the number of black contaminants having a size of 0.1 mm or larger was counted. The collection of the depolymerized cellulose ether and the counting of the number of the black contaminants were repeated 20 times, where a generation amount of the black contaminants was defined as the number of the black contaminants per 100 g, i.e., twice the total amount of the depolymerized cellulose ether collected.

### <Evaluaiton of #100 pass rate>

After supplying 200 g of the depolymerized cellulose ether to a RO-TAP sieve shaker (by TAKEDA RIKA KOGYO Co., Ltd.) with one layer of a 100-mesh sieve (by Kansai Wire Netting Co., Ltd., effective sieve area 0.0314 m², opening 0.15 mm) installed therein, sieving was performed at a rotation number of 250 rpm, a shake width of 50 mm, and a hammer stroke rate of 67 times/min for 10 min. Next, the weight of the depolymerized cellulose ether that had passed through the sieve was measured, and the #100 pass rate was defined as (weight of depolymerized cellulose ether that has passed through sieve / weight of depolymerized cellulose ether supplied to sieve) × 100. This evaluation was conducted for the purpose of verifying whether or not agglomerates had occurred.

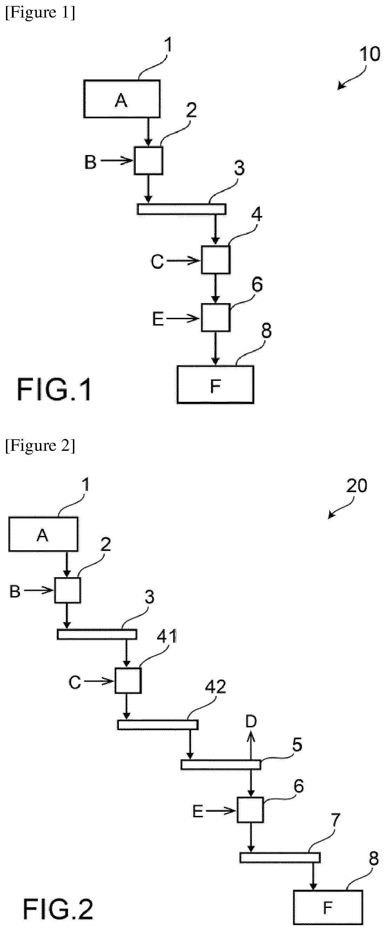

FIG.1 is a schematic drawing showing a production system 10 used in the continuous production method of the present invention for producing the depolymerized cellulose ether. In the production system 10 shown in FIG.1, the discharge port of a raw material tank 1 is connected to the supply port of a moisture conditioning tank 2 through a pipe, the discharge port of the moisture conditioning tank 2 is connected to the supply port of a temperature raising apparatus 3 through a pipe, the discharge port of the temperature raising apparatus 3 is connected to the supply port of a depolymerization apparatus 4 through a pipe, the discharge port of the depolymerization apparatus 4 is connected to the supply port of a neutralization tank 6 through a pipe, and the discharge port of the neutralization tank 6 is connected to the supply port of a product tank 8 through a pipe.

Further, the raw material tank 1 has a supply port of a raw material cellulose ether A, the moisture conditioning tank 2 has a supply port of a water vapor B, the depolymerization apparatus 4 has a supply port of a gaseous hydrogen chloride (hydrogen chloride gas) C, and the neutralization tank 6 has a supply port of a basic compound E.

### Working example 1

FIG.2 is a schematic drawing showing a production system 20 used in the continuous production method of the present invention for producing the depolymerized cellulose ether; the production system 20 has a configuration different from that shown in FIG.1.

In the following working examples, the production system shown in FIG.2 was used. In the production system 20 shown in FIG.2, the discharge port of a raw material tank 1 is connected to the supply port of a moisture conditioning tank 2 through a pipe, the discharge port of the moisture conditioning tank 2 is connected to the supply port of a temperature raising apparatus 3 through a pipe, the discharge port of the temperature raising apparatus 3 is connected to the supply port of a depolymerization apparatus (1) 41 through a pipe, the discharge port of the depolymerization apparatus (1) 41 is connected to the supply port of a depolymerization apparatus (2) 42 through a pipe, the discharge port of the depolymerization apparatus (2) 42 is connected to the supply port of a washing apparatus 5 through a pipe, the discharge port of the washing apparatus 5 is connected to the supply port of a neutralization tank 6 through a pipe, the discharge port of the neutralization tank 6 is connected to the supply port of a cooling apparatus 7 through a pipe, and the discharge port of the cooling apparatus 7 is connected to the supply port of a product tank 8 through a pipe.

Further, the raw material tank 1 has a supply port of a raw material cellulose ether A, the moisture conditioning tank 2 has a supply port of a water vapor B, the depolymerization apparatus (1) 41 has a supply port of a gaseous hydrogen chloride (hydrogen chloride gas) C, the washing apparatus 5 has a discharge port of hydrogen chloride and water D, and the neutralization tank 6 has a supply port of a basic compound E.

Each apparatus is described below.

### (1) Moisture conditioning tank

As the moisture conditioning tank, there was used one that had an effective volume of 50 L and was equipped with a jacketed vertical high-speed stirring mixer having a main shaft and a chopper. A rotary valve-equipped supply port is provided on a top board of the moisture conditioning tank, whereby the raw material cellulose ether can be continuously supplied at a constant speed. A rotary valve-equipped discharge port is provided on a wall surface of the moisture conditioning tank, whereby the moisture-conditioned cellulose ether in the tank can be continuously discharged at a constant speed. Further, a bag filter is provided on the top board.

### (2) Temperature raising apparatus

As the temperature raising apparatus, there was used one that was equipped with a jacketed screw conveyor having a screw diameter of 120 mm, a shaft diameter of 80 mm, a screw length of 5 m, and a screw pitch of 100 mm.

### (3) Depolymerization apparatus (1)

As the depolymerization apparatus (1), there was used one that had an effective volume of 50 L and was equipped with a jacketed vertical high-speed stirring mixer having a main shaft and a chopper. A rotary valve-equipped supply port is provided on a top board of the depolymerization apparatus (1), whereby the temperature-raised cellulose ether can be continuously supplied at a constant speed. A rotary valve-equipped discharge port is provided on a wall surface of the depolymerization apparatus (1), whereby the depolymerized cellulose ether in the tank can be continuously discharged at a constant speed.

### (4) Depolymerization apparatus (2)

As the depolymerization apparatus (2), there was used one that was equipped with a screw conveyor having a screw diameter of 120 mm, a shaft diameter of 80 mm, a screw length of 100 m, and a screw pitch of 100 mm.

### (5) Washing apparatus

As the washing apparatus, there was used one that was equipped with a jacketed screw conveyor having a screw diameter of 120 mm, a shaft diameter of 80 mm, a screw length of 40 m, and a screw pitch of 100 mm.

### (6) Neutralization tank

As the neutralization tank, there was used one that had an effective volume of 50 L and was equipped with a jacketed vertical high-speed stirring mixer having a main shaft and a chopper. A rotary valve-equipped supply port is provided on a top board of the neutralization tank, whereby the depolymerized cellulose ether product can be continuously supplied at a constant speed. Further, a rotary valve-equipped discharge port is provided on a wall surface of the neutralization tank, whereby the depolymerized cellulose ether in the tank can be continuously discharged at a constant speed.

### (7) Cooling apparatus

As the cooling apparatus, there was used one that was equipped with a jacketed screw conveyor having a screw diameter of 120 mm, a shaft diameter of 80 mm, a screw length of 5 m, and a screw pitch of 100 mm.

A cellulose ether having a low degree of polymerization was continuously produced under the following operating conditions.

### (i) Moisture conditioning step

A raw material cellulose ether of 20°C (HPMC having 29.0% by mass of methoxy groups, 9.1% by mass of hydroxypropoxy groups, a viscosity of 1,000 mPa·s in a 2.0% by mass aqueous solution, and a water content ratio of 0.5% by mass) was continuously supplied from the raw material tank to the moisture conditioning tank at a rate of 180 kg/hr in terms of anhydrous cellulose ether. The moisture conditioning tank was operated at a main shaft rotation number of 250 rpm, a chopper rotation number of 1,000 rpm, and a jacket temperature of 80°C. Further, nitrogen gas was supplied into the moisture conditioning tank.

With respect to the supply rate of the raw material cellulose ether, a water vapor of 110°C was continuously supplied from the water vapor supply port of the moisture conditioning tank to the powder layer of the raw material cellulose ether at a supply rate yielding a weight ratio of 0.040 so as to bring the water vapor into contact with the raw material cellulose ether, thereby obtaining the moisture-conditioned cellulose ether. While keeping supplying the raw material cellulose ether, the moisture-conditioned cellulose ether was continuously discharged from the discharge port of the moisture conditioning tank at a rate of 180 kg/hr in terms of anhydrous cellulose ether. The product temperature of the moisture-conditioned cellulose ether discharged from the moisture conditioning tank was 70°C, and the water content ratio thereof was 2.9% by mass.

Shown under "(a) Moisture conditioning step" in Table 1 are the apparatuses used as the moisture conditioning tanks, the jacket temperatures of the moisture conditioning tanks, the forms of water, the amounts of water supplied with respect to the amounts of the raw material cellulose ether supplied (amount of water supplied/amount of raw material cellulose ether supplied), the temperatures of the raw material cellulose ether, the temperatures of the moisture-conditioned cellulose ether, and the water content ratios of the moisture-conditioned cellulose ether.

### (ii) Heating (or temperature raising) step

The moisture-conditioned cellulose ether was continuously supplied to the temperature raising apparatus at a rate of 180 kg/hr in terms of anhydrous cellulose ether. A hot water of 90°C was circulated in the jacket of the temperature raising apparatus. The screw of the temperature raising apparatus was rotated at a rate of 20 rpm. The temperature-raised cellulose ether was discharged from the discharge port of the temperature raising apparatus at a rate of 180 kg/hr in terms of anhydrous cellulose ether. When discharged from the temperature raising apparatus, the product temperature of the temperature-raised cellulose ether was 80°C, and the water content ratio thereof was 2.8% by mass.

Shown under "(b) Temperature raising step" in Table 1 are the temperature raising apparatuses used, the jacket temperatures of the temperature raising apparatuses, the temperatures of the moisture-conditioned cellulose ether, the temperatures of the temperature-raised cellulose ether, and the water content ratios of the temperature-raised cellulose ether.

### (iii) Depolymerizing step

The temperature-raised cellulose ether was continuously supplied to the depolymerization apparatus (1) at a rate of 180 kg/hr in terms of anhydrous cellulose ether. The depolymerization apparatus (1) was operated at a main shaft rotation number of 250 rpm, a chopper rotation number of 1,000 rpm, a jacket temperature of 80°C, and an inner pressure of -30 kPaG. With respect to the supply rate of the temperature-raised cellulose ether, a hydrogen chloride gas was continuously supplied from the gaseous hydrogen chloride supply port of the depolymerization apparatus (1) to the powder layer of the temperature-raised cellulose ether at a supply rate yielding a weight ratio of 0.0040 so as to bring the hydrogen chloride gas into contact with the temperature-raised cellulose ether. While keeping supplying the temperature-raised cellulose ether, the depolymerized cellulose ether product was continuously supplied from the discharge port of the depolymerization apparatus (1) to the depolymerization apparatus (2).

The jacket temperature of the depolymerization apparatus (2) was 80°C, and the inner pressure therein was -5 kPaG. The screw of the depolymerization apparatus (2) was rotated at a rate of 20 rpm.

Here, the depolymerization time of the depolymerized cellulose ether product in the depolymerization apparatus (1) was 0.1 hours, and the depolymerization time of the depolymerized cellulose ether product in the depolymerization apparatus (2) was 1 hour, which made a total depolymerization time of 1.1 hours. The depolymerized cellulose ether product was continuously discharged from the discharge port of the depolymerization apparatus (2) at a rate of 180 kg/hr in terms of anhydrous cellulose ether. The temperature of the depolymerized cellulose ether product was 80°C.

### (iv) Washing step

The depolymerized cellulose ether product was continuously supplied to the washing apparatus at a rate of 180 kg/hr in terms of anhydrous cellulose ether. The jacket temperature of the washing apparatus was 80°C. The screw of the washing apparatus was rotated at a rate of 20 rpm. Further, a vacuum pump was used to remove part of the hydrogen chloride gas, water vapor, and hydrochloric acid aqueous solution from the washing apparatus's discharge port of hydrogen chloride and water by maintaining the pressure in the washing apparatus at -98 kPaG. The washed depolymerized cellulose ether product was continuously discharged from the discharge port of the washing apparatus at a rate of 180 kg/hr in terms of anhydrous cellulose ether.

### (v) Neutralizing step

The washed depolymerized cellulose ether product was continuously supplied to the neutralization tank at a rate of 180 kg/hr in terms of anhydrous cellulose ether. The neutralization tank was operated at a main shaft rotation number of 250 rpm, a chopper rotation number of 1,000 rpm, and a jacket temperature of 80°C.

With respect to the supply rate of the depolymerized cellulose ether product, a sodium hydrogen carbonate powder was continuously supplied from the basic compound supply port of the neutralization tank at a supply rate yielding a weight ratio of 0.0040 so as to allow the sodium hydrogen carbonate powder to be mixed with the cellulose ether product to obtain the depolymerized cellulose ether. While keeping supplying the depolymerized cellulose ether product, the depolymerized cellulose ether was continuously discharged from the discharge port of the neutralization apparatus at a rate of 180 kg/hr in terms of anhydrous cellulose ether. When discharged from the neutralization tank, the temperature of the depolymerized cellulose ether was 80°C.

### (vi) Cooling step

The depolymerized cellulose ether was continuously supplied to the cooling apparatus at a rate of 180 kg/hr in terms of anhydrous cellulose ether. A water of 10°C was circulated in the jacket of the cooling apparatus. The screw of the cooling apparatus was rotated at a rate of 20 rpm. The depolymerized cellulose ether was continuously discharged from the discharge port of the cooling apparatus to the product tank at a rate of 180 kg/hr in terms of anhydrous cellulose ether. Here, when discharged from the cooling apparatus, the temperature of the depolymerized cellulose ether was 30°C.

Under the above conditions, the production of the depolymerized cellulose ether was conducted for 24 hours in a row, and there were produced a total of 4,320 kg of the depolymerized cellulose ether in terms of anhydrous cellulose ether. Samples of the depolymerized cellulose ether were taken from the product tank and then analyzed.

After the 24-hour continuous production was over, the moisture conditioning tank and the temperature raising apparatus were visually observed to check the status of adhesion or the like.

Further, as for each depolymerized cellulose ether obtained, the viscosity of its 2% by mass aqueous solution at 20°C was measured by the above method, and the rate of decrease in viscosity was calculated based on the viscosity of the 2% by mass aqueous solution of the raw material cellulose ether at 20°C.

Furthermore, with regard to each depolymerized cellulose ether obtained, the aforementioned methods were used to measure degree of yellowness, evaluate the amount of black contaminants, and calculate the #100 pass rate.

The results are shown in Tables 2 and 3.

### Working example 2

The depolymerized cellulose ether was produced by the same method as the working example 1, except that the jacket temperature of the moisture conditioning tank was set to 25°C, and that the jacket temperature of the heating (or temperature raising) apparatus in the heating (or temperature raising) step was set to 100°C. The results are shown in Tables 2 and 3.

### Comparative example 1

The depolymerized cellulose ether was produced by the same method as the working example 1, except that the jacket temperature of the raw material tank was set to 100°C to temperature-condition the raw material cellulose ether in the raw material tank so that the temperature of the raw material cellulose ether supplied to the moisture conditioning step would be 80°C, and that the jacket temperature of the heating (or temperature raising) apparatus in the heating (or temperature raising) step was set to 75°C so that the temperature of the heated (or temperature-raised) cellulose ether would be 80°C as were the cases of the working examples 1 and 2. The results are shown in Tables 2 and 3.

### Comparative example 2

Attempts were made to produce the depolymerized cellulose ether by the same method as the working example 1, except that the jacket temperature of the raw material tank was set to 100°C to temperature-condition the raw material cellulose ether in the raw material tank so that the temperature of the raw material cellulose ether supplied to the moisture conditioning step would be 80°C, and that with respect to the supply rate of the raw material cellulose ether, a water vapor of 110°C was supplied to the raw material cellulose ether at a supply rate yielding a weight ratio of 0.150. However, adhesion and clogging occurred in large amounts at the discharge port of the moisture conditioning tank and other places, which made it impossible to operate in a continuous manner and perform the heating (or temperature raising) step and beyond. The results are shown in Tables 2 and 3.

### Comparative example 3

The depolymerized cellulose ether was produced by the same method as the working example 1, except that the jacket temperature of the moisture conditioning tank was set to 25°C whereby a liquid water of 20°C was brought into contact with the raw material cellulose ether instead of a water vapor, and that the jacket temperature of the heating (or temperature raising) apparatus in the heating (or temperature raising) step was set to 130°C so that the temperature of the heated (or temperature-raised) cellulose ether would be 80°C as were the cases of the working examples 1 and 2. The results are shown in Tables 2 and 3.

**[Table 1]**

| | a) Moisture conditioning step | | | | | | |
|---|---|---|---|---|---|---|---|
| | Moisture conditioning apparatus | Jacket temperature of moisture conditioning tank | Form of water | Amount of water supplied / Amount of raw material cellulose ether supplied | Temperature of raw material cellulose ether | Tempera- ture of mois- ture-con- ditioned cellulose ether | Water content ratio of moisture-conditioned cellulose ether |
| | - | °C | - | Weight ratio | °C | °C | wt% |
| Working Example 1 | Vertical mixer | 80 | Water vapor (110°C) | 0.040 | 20 | 70 | 2.9 |
| Working Example 2 | Vertical mixer | 25 | Water vapor (110°C) | 0.031 | 20 | 55 | 3.1 |
| Comparative Example 1 | Vertical mixer | 80 | Water vapor (110°C) | 0.040 | 80 | 85 | 1.3 |
| Comparative Example 2 | Vertical mixer | 80 | Water vapor (110°C) | 0.150 | 80 | 95 | 3.5 |
| Comparative Example 3 | Vertical mixer | 25 | Water (20°C) | 0.032 | 20 | 20 | 3.4 |

| | b) Temperature raising step | | | | |
|---|---|---|---|---|---|
| | Tempera- ture raising apparatus | Jacket tempera- ture of tempera- ture raising apparatus | Tempera-ture of mois-ture-condi-tioned cellulose ether | Temperature of temperature-raised cellulose ether | Water content ratio of temperature-raised cellulose ether |
| | - | °C | °C | °C | wt% |
| Working Example 1 | Screw conveyor | 90 | 70 | 80 | 2.8 |
| Working Example 2 | Screw conveyor | 100 | 55 | 80 | 2.8 |
| Comparative Example 1 | Screw conveyor | 75 | 85 | 80 | 1.3 |
| Comparative Example 2 | Temperature raising step was unable to be performed | | | | |
| Comparative Example 3 | Screw conveyor | 130 | 20 | 80 | 2.8 |

**[Table 2]**

| | Status in moisture conditioning step (Powder adhered site in moisture conditioning tank) | | | | Status in temperature raising step (Powder adhered site in temperature raising apparatus) | |
|---|---|---|---|---|---|---|
| | Wall and top board | Main shaft and chopper | Bag filter | Discharge port and rotary valve | Adhesion to wall | Adhesion to shaft |
| | - | - | - | - | - | - |
| Working example 1 | ○ | ○ | ○ | A | ○ | ○ |
| Working example 2 | Δ | ○ | ○ | A | ○ | ○ |
| Comparative example 1 | Δ | ○ | Δ | B | ○ | ○ |
| Comparative example 2 | × | × | × | C | Temperature raising step was unable to be performed | |
| Comparative example 3 | Δ | Δ | Δ | B | Δ | Δ |

| | | | | | | |
|---|---|---|---|---|---|---|
| ○: No adhesion was observed A: No adhesion was observed △ : Adhesion occurred B :Adhesion occurred × : Adhesion occurred in large amounts C: Continuous operation was impossible as adhesion and clogging occurred in large amounts | | | | | | |

**[Table 3]**

| | Quality of depolymerized cellulose ether | | | | |
|---|---|---|---|---|---|
| | 2wt% viscosity | Rate of decrease in viscosity | Degree of yellowness | Black contaminants | #100 pass rate |
| | mPa·s | % | - | Number | % |
| Working example 1 | 4.0 | 99.6 | 6 | 0 | 100 |
| Working example 2 | 4.0 | 99.6 | 6 | 0 | 100 |
| Comparative example 1 | 4.0 | 99.6 | 16 | 0 | 100 |
| Comparative example 2 | Depolymerizing step was unable to be performed | | | | |
| Comparative example 3 | 4.0 | 99.6 | 6 | 120 | 90 |

In the working examples 1 and 2 where the temperature of the raw material cellulose ether supplied to the moisture conditioning tank was 20°C, adhesion of the cellulose ether powder to the apparatuses in the moisture conditioning and temperature raising steps were insignificant such that the depolymerized cellulose ether was able to be continuously produced. Further, the depolymerized cellulose ethers obtained exhibited low degrees of yellowness, and no black contaminants had occurred therein. Particularly, in the working example 1 where the jacket temperature of the moisture conditioning tank was 80°C, adhesion of the cellulose ether powder to apparatuses was observed neither in the moisture conditioning step nor in the temperature raising step.

In the comparative example 1 where the temperature of the raw material cellulose ether supplied to the moisture conditioning tank was 80°C, even when a water vapor of the same amount as the working example 1 was supplied, the moisture-conditioned cellulose ether exhibited a lower water content ratio, which, as a result, led to a higher degree of yellowness of the depolymerized cellulose ether obtained. In the comparative example 2 where the amount of the water vapor supplied in the moisture conditioning step was increased, while the moisture-conditioned cellulose ether exhibited a higher water content ratio, not only adhesion of the cellulose ether powder in the moisture conditioning tank was significant, but the amount of the moisture-conditioned cellulose ether discharged was unstable due to clogging at the discharge port of the moisture conditioning tank, which made it impossible to produce the depolymerized cellulose ether in a continuous manner.

In the comparative example 3 where a liquid water of 20°C was used in the moisture conditioning step, adhesion occurred in the moisture conditioning tank and the temperature raising apparatus. Further, not only product value was impaired due to an increase in the amount of the black contaminants in the depolymerized cellulose ether obtained, but the #100 pass rate dropped as well due to increased agglomerates, which led to a decreased yield.

### [Description of the symbols]

10, 20 Production system
1 Raw material tank
2 Moisture conditioning tank
3 Heating (or temperature raising) apparatus
4 Depolymerization apparatus
41 Depolymerization apparatus (1)
42 Depolymerization apparatus (2)
5 Washing apparatus
6 Neutralization tank
7 Cooling apparatus
8 Product tank
A Raw material cellulose ether
B Water vapor
C Hydrogen chloride gas
D Hydrogen chloride and water
E Basic compound
F Depolymerized cellulose ether

## Claims

1. A method of continuously producing a depolymerized cellulose ether, comprising the steps of:
(a) bringing a raw material cellulose ether, continuously supplied from a raw material tank to a moisture conditioning tank, into contact with a water vapor for moisture conditioning to obtain a moisture-conditioned cellulose ether;
(b) heating the moisture-conditioned cellulose ether, continuously supplied from the step (a), to obtain a heated cellulose ether;
(c) continuously bringing gaseous hydrogen chloride into contact with the heated cellulose ether to depolymerize the heated cellulose ether to obtain a depolymerized cellulose ether product; and
(d) mixing the depolymerized cellulose ether product with a basic compound for neutralization to obtain a depolymerized cellulose ether,
wherein the temperature of the raw material cellulose ether continuously supplied from the raw material tank to the moisture conditioning tank ranges from 3°C to less than 40°C.

2. The method according to claim 1, further comprising a step of eliminating hydrogen chloride and water from the depolymerized cellulose ether product continuously supplied from the step (c) to obtain a washed depolymerized cellulose ether product, wherein the step of eliminating hydrogen chloride and water is performed between the steps (c) and (d).

3. The method according to claim 1, wherein a ratio between a rate at which the moisture-conditioned cellulose ether is supplied from the step (a) to the step (b) and a rate at which the depolymerized cellulose ether product is discharged from the step (c) ranges from 0.9 to 1.1.

4. The method according to claim 1 further comprising a cooling step of cooling the depolymerized cellulose ether after the step (d).

5. The method according to claim 1, wherein the temperature of the moisture-conditioned cellulose ether continuously supplied from the step (a) to the step (b) ranges from 50 to 90°C.

6. The method according to claim 1, wherein in the step (a), the moisture-conditioning tank is jacketed and the jacket temperature ranges from 20 to 120°C.

7. The method according to any one of claims 1 to 6, wherein the raw material cellulose ether is at least one selected from the group consisting of an alkylcellulose, a hydroxyalkylcellulose, and a hydroxyalkyl alkyl cellulose.
